## Europäisches Patentamt

## European Patent Office

## Office européen des brevets

(11) Numéro de publication: **0 278 841 B1**

(12) **FASCICULE DE BREVET EUROPEEN**

(45) Date de publication du fascicule du brevet:
08.08.90

(51) Int. Cl.⁵: **F16F 9/46**, B60G 17/08, B60G 15/00

(21) Numéro de dépôt: **88400194.2**

(22) Date de dépôt: **28.01.88**

(54) **Suspension mixte à hauteur constante avec amortissement variable pour essieu de véhicule automobile.**

(30) Priorité: **29.01.87 FR 8701297**

(43) Date de publication de la demande:
**17.08.88 Bulletin 88/33**

(45) Mention de la délivrance du brevet:
**08.08.90 Bulletin 90/32**

(84) Etats contractants désignés:
**DE GB IT**

(56) Documents cités:
**EP-A- 0 176 390
BE-A- 556 891
DE-A- 3 427 843
FR-A- 2 088 803
FR-A- 2 427 923
US-A- 3 945 626**

**PATENT ABSTRACTS OF JAPAN,
vol. 4, no. 45 (M-6)[527], page 4 M 6; &
JP-A-55 14 337 (HONDA GIKEN KOGYO K.K.) 31.01.1980
PATENT ABSTRACTS OF JAPAN,
vol. 1, no. 65 (M-77)[968], 24 juin 1977; &
JP-A-52 14 182 (SHOWA SEISAKUSHO K.K.) 02.02.1977**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Richard, Denis, 65, rue Mirabeau, F-94600 Choisy-Le-Roi(FR)**

(74) Mandataire: **Boivin, Claude, 9, rue Edouard-Charton, F-78000 Versailles(FR)**

ACTORUM AG

## Description

La présente invention concerne une suspension mixte d'essieu de véhicule automobile comportant montés en parallèle des moyens élastiques métalliques et des moyens élastiques hydropneumatiques.

Les suspensions d'essieu automobile à ressorts métalliques se prêtent difficilement à la correction de hauteur de sorte que la hauteur de l'essieu dépend de la charge ainsi que les caractéristiques de rigidité et d'amortissement.

Dans ces conditions, il est également difficile de réaliser un amortissement dépendant des paramètres de conduite tels que la vitesse, l'angle du volant, l'accélération ou le freinage.

D'autre part, les suspensions à ressorts métalliques présentent des avantages; ainsi, elles admettent en général des fréquences propres plus élevées que les suspensions hydropneumatiques donnant ainsi une impression de rigidité.

On connaît des suspensions mixtes d'essieu de véhicule automobile qui comportent montés en parallèle des moyens élastiques métalliques et des moyens élastiques hydropneumatiques, les moyens métalliques prenant en compte par exemple 80% de la charge en ordre de marche et les moyens hydropneumatiques prenant en compte le reste de la charge de l'essieu. Une telle suspension mixte est décrite par exemple dans le document BE-A 556 891. Dans ces suspensions mixtes qui remédient aux inconvénients des suspensions uniquement métalliques et des suspensions uniquement hydropneumatiques, les moyens élastiques hydropneumatiques sont composés d'un élément porteur qui comporte un piston monté coulissant dans un cylindre relié hydrauliquement à un accumulateur de suspension; ces suspensions mixtes comportent également des moyens de correction de hauteur et des moyens d'amortissement agissant sur les moyens élastiques hydropneumatiques. Mais l'expérience montre que lorsque, dans une suspension mixte, les moyens hydropneumatiques ne prennent qu'une fraction de la charge, par exemple 20%, les pressions d'huile sont insuffisantes pour un bon fonctionnement de l'amortisseur; la disposition, usuelle consistant à prévoir un amortisseur unique intégré à l'accumulateur de suspension risque de produire une cavitation.

Le document DE-A 3 427 843 décrit une suspension hydropneumatique dans laquelle les moyens d'amortissement comprennent deux amortisseurs, l'un porté par le piston de l'élément porteur et un deuxième qui est monté fixe à l'entrée de l'accumulateur et est à clapet, ce deuxième amortisseur étant associé à un tiroir hydraulique permettant de le court-circuiter et pouvant être déplacé en fonction d'un paramètre de conduite.

Mais ces moyens d'amortissement ne peuvent être utilisés tels quels dans une suspension mixte, le risque de cavitation continuant d'exister.

La présente invention, telle que définie dans la revendication 1, a pour objet une suspension mixte dans laquelle tout risque de cavitation est supprimé, l'amortissement pouvant néanmoins être changé en fonction de divers paramètres sans modifier la rigidité.

Dans cette suspension, l'effet des moyens élastiques métalliques est indépendant de la charge étant donné la présence du correcteur de hauteur. Une variation de la charge n'agit ainsi que sur les moyens élastiques hydropneumatiques. L'amortissement est normalement réalisé par l'amortisseur monté sur le piston de l'élément porteur. Mais lorsqu'un critère désiré intervient, par exemple la vitesse du véhicule, un coup de volant, une accélération ou un freinage, l'amortisseur incorporé à l'accumulateur hydropneumatique entre en action et augmente l'amortissement. La présence d'amortisseurs à clapets permet l'obtention d'une caractéristique pression-débit correcte, ce qui ne serait pas le cas avec des amortisseurs à gicleur.

On a décrit ci-après, à titre d'exemple non limitatif, un mode de réalisation de la suspension mixte selon l'invention, avec référence aux dessins annexés dans lesquels:

La Figure 1 est une vue en élévation de la suspension;

La Figure 2 est une vue en coupe axiale à plus grande échelle de la partie supérieure de l'élément porteur;

La Figure 3 est une vue semblable à la Figure 2 de la partie inférieure de l'élément porteur;

La Figure 4 est une vue en coupe axiale de l'accumulateur hydropneumatique et de son support;

La Figure 5 est le schéma hydraulique de la suspension.

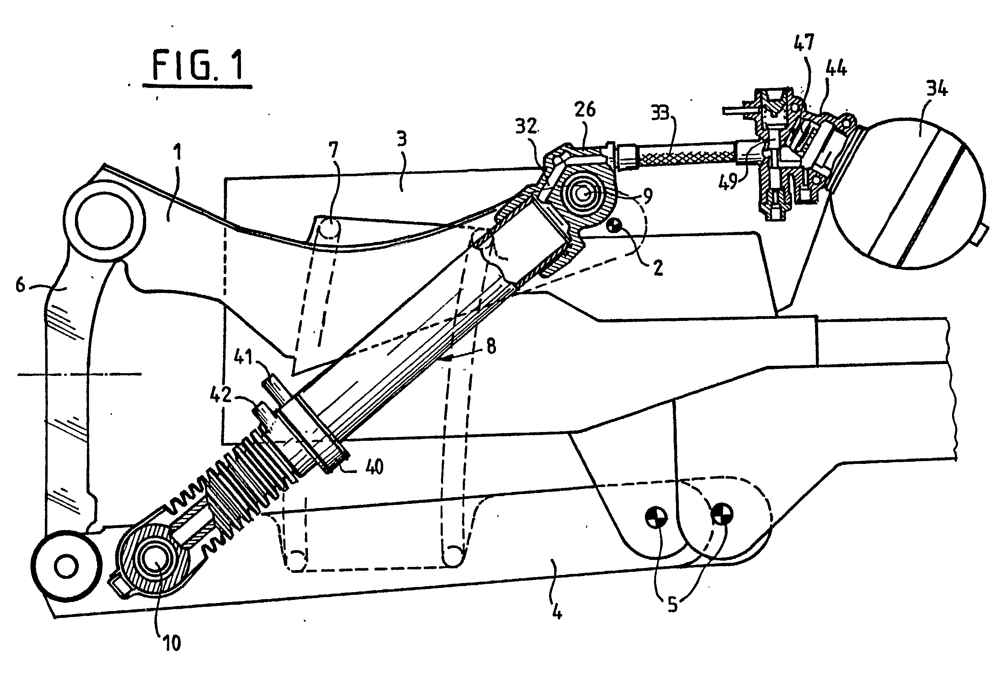

A la Figure 1, on voit un essieu arrière comprenant pour chaque roue un triangle supérieur 1 qui est monté pivotant en 2 sur la caisse 3 du véhicule, et un triangle inférieur 4 qui est monté pivotant en 5 sur cette caisse. Les deux triangles 1 et 4 sont reliés l'un à l'autre, à leurs extrémités, par le pivot de roue 6. La suspension est assurée d'une part par un ressort de compression métallique 7 qui est interposé entre la caisse 3 et le triangle inférieur 4, et d'autre part par un élément porteur qui est désigné d'une façon générale au dessin par la référence 8 et est articulé respectivement en 9 et 10 sur la caisse 3 et sur le triangle 4.

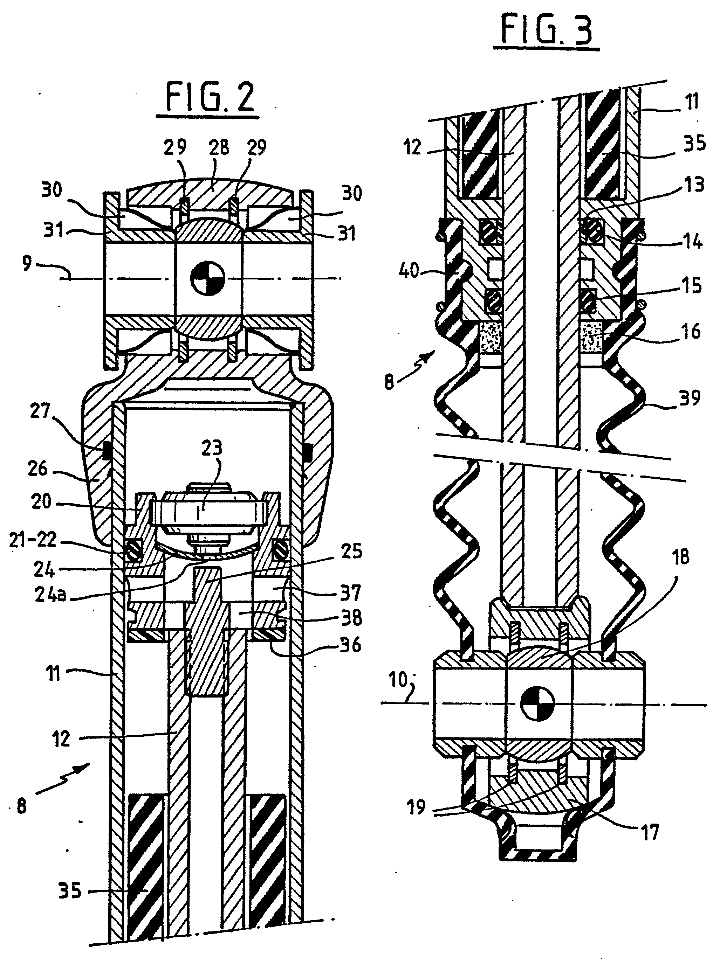

Comme on le voit plus particulièrement aux Figures 2 et 3, l'élément porteur 8 est constitué par un cylindre 11 à l'intérieur duquel peut coulisser une tige de piston 12, l'étanchéité étant assurée par un joint en matière plastique 13 et un joint torique en élastomère 14 du côté de la haute pression et par un joint torique en élastomère 15 et un joint en feutre 16 du côté de la basse pression.

A la partie inférieure de la tige de piston 12 est soudé un boîtier 17 à l'intérieur duquel se trouve une rotule 18 maintenue en place par deux circlips 19 et assurant la liaison de l'élément au triangle 4. A la partie supérieure de la tige de piston 12 est vissé un palier supérieur 20 qui constitue le piston proprement dit et comporte une étanchéité réalisée par l'ensemble joint en matière plastique 21/joint torique 22. A l'intérieur du palier 20 est serti un amortisseur 23 à clapets muni d'un perçage calibré axial, du genre de ceux qui sont représentés à la Figure 1 du brevet FR 2 088 803, sur cet amortisseur 23, un clapet 24 est légèrement en tension, la levée de ce clapet étant limitée par une butée 25; le clapet 24 est percé d'un trou 24a plus petit que celui percé dans l'axe de l'amortisseur 23. Par suite, dans le sens de la détente, le liquide traverse le trou 24a et le perçage axial de l'amortisseur, alors que dans le sens attaque, le clapet s'écarte de l'amortisseur, en étant limité dans sa course par la butée 25, et le liquide peut passer par les clapets l'amortisseur.

La partie supérieure du cylindre 11, c'est-à-dire le côté de l'élément 8 opposé à la tige de piston 12, est fermé par une tête 26 vissée sur celui-ci, l'étanchéité étant assurée par un joint 27. Cette tête comporte un alésage qui reçoit une rotule 28, maintenue en place par des circlips 29; deux joints double lèvres 30 mettent la rotule à l'abri des projections d'eau et des poussières. Deux douilles 31 servent à la fixation sur la caisse 3 du véhicule.

La tête 26 comporte un conduit 32 qui se termine par un filetage où est fixé un flexible de liaison 33 à une sphère de suspension 34.

A l'intérieur de l'élément porteur 8, entre le cylindre 11 et le piston 12, une butée de détente en caoutchouc 35 limite la course de détente. La butée vient en appui sur une rondelle plastique 36 aménagée pour laisser passer le liquide par des trous 37 et 38. Un pare-poussière 39 vient coiffer la partie inférieure du cylindre et est tenu en place par le collier à double serrage 40. Ce pare-poussière comporte une première tétine de retour de suintement 41 et une seconde tétine de mise à l'atmosphère 42 dans un endroit à l'abri de la poussière, de façon à permettre la respiration du pare-poussière qui enveloppe totalement la rotule en se plaçant dans les deux gorges des deux rondelles 43 qui servent à la fixation sur véhicule.

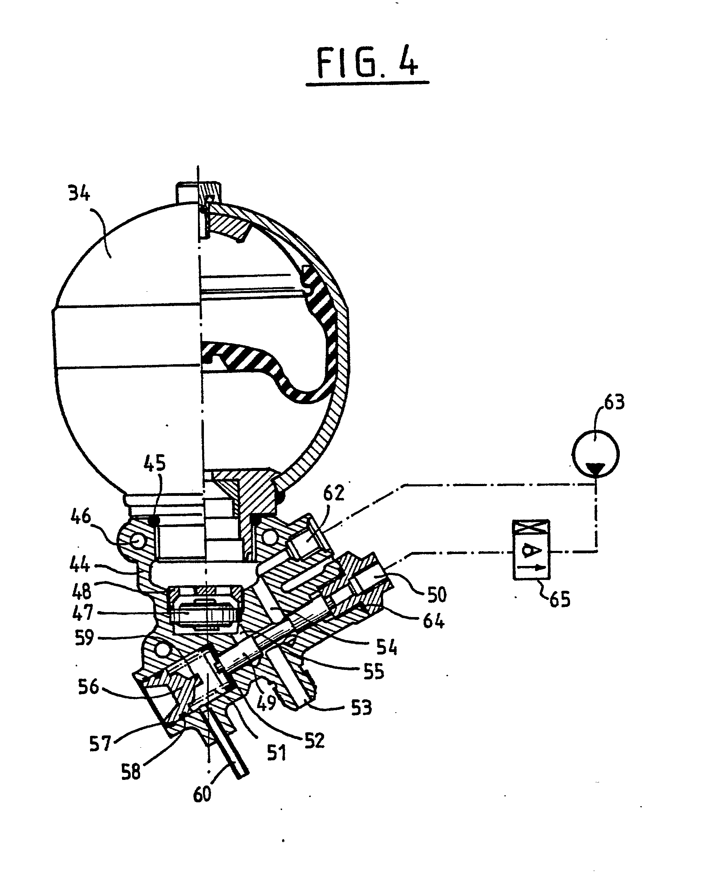

La sphère de suspension 34 est vissée sur un support 44, l'étanchéité étant assurée par un joint 45 (voir Figure 4). Ce support comporte trois trous 46 servant à sa fixation sur la structure du véhicule. A l'intérieur de ce support est placé un amortisseur 47 maintenu en place par un écrou 48; cet amortisseur a une constitution analogue à celle de l'amortisseur 23, c'est-à-dire qu'il est du type à clapets. Un tiroir 49 normalement maintenu en appui sur un raccord 50 par un ressort 51, lui-même centré par une coupelle 52, met en communication l'orifice d'arrivée 53 du liquide venant du conduit flexible 33 et de l'élément porteur 8 avec un conduit 54 menant à la sphère de suspension. Le conduit 55 menant à l'amortisseur 47 est fermé par le tiroir 49. Le ressort 51 est maintenu par un bouchon 56 solidarisé au support 44 par un jonc 57 et étanchéifié par un joint 58. Une butée 59 limite la course du tiroir 49. Une pissette 60 permet le retour des suintements du tiroir au réservoir 61. Un raccord 62 reçoit la canalisation qui vient de la pompe 63. Le raccord 50 étanchéifié par un joint 64 est relié à la pompe 63 par une électro-vanne 65.

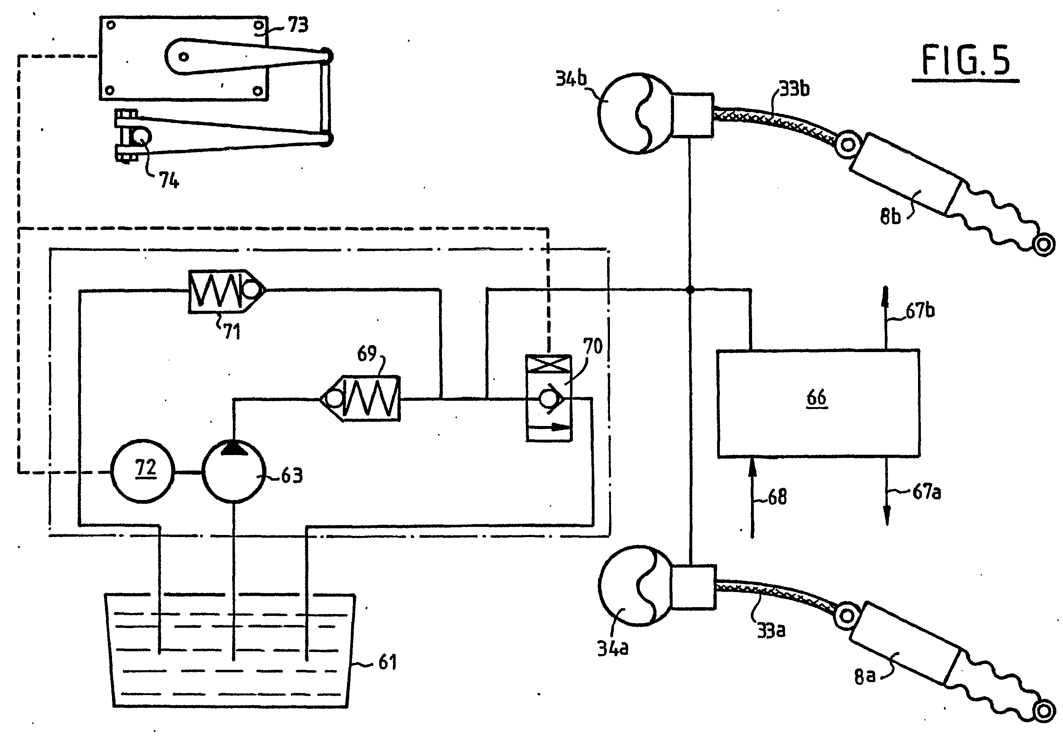

A la Figure 5 on voit les éléments porteurs 8a et 8b des deux roues de l'essieu avec leurs sphères de suspension 34a et 34b auxquelles ils sont reliés par les flexibles 33a et 33b. Les deux sphères sont reliées par leurs raccords 62 à un correcteur de freinage 66 qui est lui-même relié en 67a et 67b aux circuits de freinage arrière respectivement gauche et droit et en 68 au maître cylindre. Les sphères de suspension sont également reliées à la pompe 63 par l'intermédiaire d'un clapet anti-retour 69 et au réservoir 61 par l'intermédiaire d'une électro-vanne 70 en parallèle de laquelle est prévu un clapet de sécurité 71; la pompe 63 est entraînée par un moteur 72. Un capteur électronique 73 lié mécaniquement au milieu de la barre anti-devers 74 est connecté au moteur 72 et à l'électro-vanne 70 de façon à mettre en service le moteur 72, donc la pompe 63, si le véhicule est trop bas, ou à ouvrir l'électro-vanne 70 si le véhicule est trop haut.

Le ressort métallique 7 est défini pour qu'il ne prenne que 80% environ de la charge en ordre de marche, soit environ 150 daN à chaque roue; il ne prendra jamais une charge plus élevée puisque le capteur 73 maintient constante la hauteur du véhicule. En revanche, l'élément porteur 8 prend en compte le restant de la charge en ordre de marche, soit 20% de cette charge; de plus il prend en compte les charges allant de la charge en ordre de marche à la charge limite, ce qui détermine une pression hydraulique d'environ 28 bars en ordre de marche et de 118 bars en charge limite.

Comme on l'a indiqué précédemment, l'effet d'amortissement produit par l'amortisseur 23 est différent en détente, le liquide devant passer par le petit trou 24a du clapet 24 qui est appliqué sur l'amortisseur 23, et en attaque, le liquide pouvant alors passer par le trou axial plus grand de l'amortisseur.

Lorsque l'électro-vanne 65 est fermée, le tiroir 49 est maintenu par le ressort 51 en appui sur le raccord 50, position dans laquelle le raccord 53 est directement en communication avec la sphère de suspension 34. En revanche, si cette électro-vanne est ouverte, le tiroir se déplace contre l'action du ressort 51 et vient occuper une position dans laquelle le raccord 53 est isolé du perçage 54 et mis en communication avec le perçage 55; le liquide doit donc traverser l'amortisseur 47 pour aller de l'élément 8 à la sphère de suspension 34 ou inversement. Cet amortisseur vient ajouter un effort d'amortissement supplémentaire en attaque et en détente à celui fourni par l'amortisseur 23. L'électro-vanne 65 peut être commandée par exemple en fonction de la vitesse du véhicule, de l'angle ou de la vitesse de pivotement du volant de direction afin d'éviter un angle de roulis trop important, de l'accélérateur pour éviter le cabrage, ou du frein pour éviter la plongée.

Il va de soi que la présente invention ne doit pas être considérée comme limitée au mode de réalisation décrit et représenté, mais en couvre, au contraire, toutes les variantes.

## Revendications

1. Suspension mixte de véhicule automobile comportant montés en parallèle des moyens élastiques métalliques (17) et des moyens élastiques hydropneumatiques composés d'un élément porteur (8) qui comporte un piston (20) monté coulissant dans un cylindre (11) relié hydrauliquement à un accumulateur à membrane (34), des moyens de correction de hauteur (70, 72 et 73) et des moyens d'amorissement agissant sur les moyens élstiques hydropneumatiques, caractérisée en ce que les moyens d'amortissement comprennent deux amortisseurs, l'un (23) porté par le piston (20) de l'élément porteur (8) et un deuxième (47) qui est monté fixe à l'entrée de l'accumulateur (34) et est à clapet, ce deuxième amortisseur étant associé à un tiroir hydraulique (49) permettant de le court-circuiter et pouvant être déplacé en fonction d'un paramètre de conduite,

— le premier amortisseur (23) est à clapet et muni d'un perçage calibré axial supplémentaire;

— ce premier amortisseur (23) et porté par la face du piston (20) opposée à la tige de piston (12);

— le cylindre (11) de l'élément porteur (8) est relié hydrauliquement à l'accumulateur (34) du côté opposé à la tige (12) du piston (20) alors que ce piston (20) est monté périphériquement étanche avec l'amortisseur (23);

— des liaisons hydrauliques (37 et 38) sont prévues dans le piston (20) pour mettre le perçage calibré de l'amortisseur (23) en communication avec la chambre du cylindre (11) dans laquelle se trouve la tige de piston (12);

— un clapet de fuite (24), percé d'un trou (24a) plus petit que celui percé dans l'axe de l'amortisseur (23), et monté dans le piston et s'applique en tension contre le premier amortisseur, le trou (24a) du clapet de fuite (24) étant aligné au perçage axial du premier amortisseur,

— le clapet de fuite (24) coopère avec une butée (25) qui limite sa course dans le sens attaque.

2. Suspension selon la revendication 1, caractérisée en ce qu'elle comporte un capteur (73) sensible à la hauteur de l'essieu et propre à délivrer des signaux actionnant une pompe (63) ou une électrovanne de retour (70) de manière à modifier le volume de liquide des accumulateurs hydropneumatiques.

**Patentansprüche**

1. Mischaufhängung für Kraftfahrzeuge mit parallel zueinander angeordneten metallelastischen Mitteln (7) und hydropneumatisch-elastischen Mitteln, die sich zusammensetzen aus einem Tragelement (8), das einen Kolben (20) enthält, der gleitend in einem Zylinder (11) angeordnet ist, welcher hydraulisch mit einem Membranspeicher (34) verbunden ist, sowie Mitteln (70, 72 und 73) zur Höhenkorrektur und Dämpfungsmitteln, die auf die hydropneumatischelastischen Mittel einwirken, dadurch gekennzeichnet, daß die Dämpfungsmittel zwei Dämpfer umfassen, von denen einer (23) vom Kolben (20) des Tragelements (8) getragen wird und ein zweiter (47) fest am Eingang des Speichers (34) angeordnet und als Klappe ausgebildet ist, wobei diesem zweiten Dämpfer ein hydraulischer Schieber (49) zugeordnet ist, der es ermöglicht, ihn kurz zu schließen und der in Abhängigkeit von einem Führungsparameter verschiebbar ist, und wobei weiterhin

— der erste Dämpfer (23) als Klappe ausgebildet und mit einer zusätzlichen kallibrierten axialen Bohrung versehen ist;

— dieser erste Dämpfer (23) von der Fläche des Kolbens (20) getragen wird, die von der Kolbenstange (12) abgewandt ist;

— der Zylinder (11) des Tragelementes (8) mit dem Speicher (34) an der Seite hydraulisch verbunden ist, die von der Stange (12) des Kolbens (20) abgewandt ist, während dieser Kolben (20) an seiner Peripherie mit dem Dämpfer (23) dichtend montiert ist;

— hydraulische Verbindungen (37 und 38) im Kolben (20) vorgesehen sind, zur Verbindung der kallibrierten Bohrung des Dämpfers (23) mit der Kammer des Zylinders (11), in welcher sich die Kolbenstange (12) befindet;

— eine Ausströmklappe (24) im Kolben vorgesehen ist, die von einem Loch (24a) durchsetzt ist, das kleiner ist als die Bohrung in der Achse des Dämpfers (23), und die sich unter Spannung an den ersten Dämpfer anlegt, wobei das Loch (24a) der Ausströmklappe (24) fluchtend zur axialen Bohrung des ersten Dämpfers angeordnet ist und die Ausströmklappe (24) mit einem Anschlag (25) zusammenwirkt, der ihren Weg in der Angriffsrichtung begrenzt.

2. Aufhängung nach Anspruch 1, dadurch gekennzeichnet, daß sie einen Sensor (73) aufweist, der auf die Achshöhe anspricht und dazu geeignet ist, Signale zu liefern, die eine Pumpe (63) oder einen elektromagnetischen Rücklaufschieber (70) derart ansteuern, daß das Flüssigkeitsvolumen der hydropneumatischen Speicher verändert wird.

**Claims**

1. Combined motor vehicle suspension comprising, mounted in parallel, metal resilient means ( 7) and hydropneumatic resilient means formed of a carrier element (8) which comprises a piston (20) mounted for sliding in a cylinder (11) connected hydraulically to a membrane accumulator (34), height correction means (70, 72 and 73) and damping means acting on the hydropneumatic resilient means, characterized in that the damping means comprise two dampers, one (23) carried by the piston (20) of the carrier element (8) and a second (47) which is mounted fixedly at the inlet of the accumulator (34) and comprises a valve, this second damper being associated with a hydraulic slide valve (49) for short-circuiting it and being able to be moved as a function of a driving parameter, - the first damper (23) comprises a valve and an additional axial calibrated bore;

— this first damper (23) is carried by the face of the piston (20) opposite the piston rod (12);

— the cylinder (11) of the carrier element (8) is connected hydraulically to the accumulator (34) on the side opposite the rod (12) of the piston (20) when this piston (20) is mounted peripherally sealed with the damper (23);

— hydraulic connections (37 and 38) are provided in the piston (20) for placing the calibrated bore of the damper (23) in communication with the chamber of the cylinder (11) in which is located the piston rod (12);

– a leak valve (24), pierced with a hole (24a) smaller than the one pierced in the axis of the damper (23), is mounted in the piston and is applied under tension against the first damper, the hole (24a) of the leak valve (24) being aligned with the axial bore of the first damper;

– the leak valve (24) cooperates with a stop (25) which limits its travel in the driving direction.

2. Suspension according to claim 1, characterized in that it comprises a sensor (73) responsive to the height of the axle and adapted to deliver signals actuating a pump (63) or a return electrovalve (70) so as to modify the liquid volume of the hydropneumatic accumulators.

## FIG. 1

EP 0 278 841 B1

EP 0 278 841 B1

## FIG. 2

## FIG. 3

# FIG. 4

FIG.5

EP 0 278 841 B1